# EUROPEAN PATENT SPECIFICATION

(11) **EP 2 575 189 B1**
(45) Date of publication and mention of the grant of the patent: **06.06.2018**
(21) Application number: 12160354.2
(22) Date of filing: 20.03.2012
(51) Int. Cl.: H01M 2/04, H01M 2/34, H01M 10/42

(54) **Rechargeable battery**
Wiederaufladbare Batterie
Batterie rechargeable

(30) Priority: 29.09.2011 US 201161540692 P; 05.01.2012 US 201213343948
(43) Date of publication of application: 03.04.2013
(73) Proprietor: Samsung SDI Co., Ltd., Gyeonggi-do (KR); Robert Bosch GmbH, 70442 Stuttgart (DE)
(72) Inventor: Han, Min-Yeol, Gyeonggi-do (KR); Byun, Sang-Won, Gyeonggi-do (KR); Yoon, Hae-Kwon, Gyeonggi-do (KR)
(74) Representative: Mounteney, Simon James

(56) References cited:
- EP-A1- 0 313 405
- EP-A1- 2 287 942
- EP-A1- 2 346 110
- EP-A1- 2 348 558
- WO-A1-02/071510
- US-A1- 2011 177 387

## Description

### BACKGROUND

### 1. Field

The invention relates generally to a rechargeable battery and, more particularly, to a rechargeable battery including a current collecting member having an improved structure.

### 2. Description of the Related Art

Unlike a primary battery, a rechargeable battery can be recharged and discharged. A small-capacity rechargeable battery is typically used for small portable electronic devices such as mobile phones, notebook computers, camcorders and the like, while a large-capacity rechargeable battery is typically used as a motor-driving power source for a hybrid vehicle and the like.

Recently, a high-output rechargeable battery using a non-aqueous electrolyte of high energy density has been developed, and a plurality of high-output rechargeable batteries can be connected in series to constitute a large-capacity battery module that can be used for driving a motor of a device, e.g., an electric automobile or the like, that requires much power. Such rechargeable batteries may have a cylindrical shape, an angular shape, or the like.

When an overcurrent flows within a rechargeable battery having a case made of a material such as metal, or the like, the temperature of the rechargeable battery increases and can result in ignition. Also, the internal pressure of the rechargeable battery can increase due to decomposition of an electrolyte within the rechargeable battery due to such an overcurrent. In such a case, the rechargeable battery may explode.

### SUMMARY

The present invention sets out to provide a rechargeable battery with improved stability by solving the above described problems.

According to the invention, there is provided a rechargeable battery as set out in Claim 1. Preferred features of the invention are set out in Claims 2 to 12.

According to an embodiment of the invention, when overcurrent flows, the electrode assemblies are electrically cut off, thus improving stability of the rechargeable battery.

### BRIEF DESCRIPTION OF THE DRAWINGS

Embodiments of the invention will be described by way of example and with reference to the accompanying drawings in which:-
FIG. 1 is a perspective view of a rechargeable battery according to a first embodiment of the invention.
FIG. 2 is a sectional view taken along line II-II in FIG. 2.
FIG. 3 is a partial exploded perspective view of the rechargeable battery according to the first embodiment of the invention.
FIG. 4 is a sectional view of a rechargeable battery according to a second embodiment of the invention.
FIG. 5 is a perspective view of a current collecting member of the rechargeable battery according to the second embodiment of the invention.
FIG. 6 is a perspective view of a current collecting member of a rechargeable battery according to a third embodiment of the invention.
FIG. 7 is a perspective view of a current collecting member of a rechargeable battery according to a fourth embodiment of the invention.
FIG. 8 is a sectional view of a rechargeable battery according to a fifth embodiment of the invention.
FIG. 9 is a partial exploded perspective view of a rechargeable battery according to a sixth embodiment of the invention.
FIG. 10 is a schematic view showing the configuration of the rechargeable battery according to the sixth embodiment of the invention.

### DETAILED DESCRIPTION

Embodiments of the invention will now be described in detail such that they can be easily carried out by a person skilled in the art with reference to the accompanying drawings. As those skilled in the art would realize, the described embodiments may be modified in various different ways, all without departing from the scope of the present invention. Like reference numerals designate like elements throughout the specification.

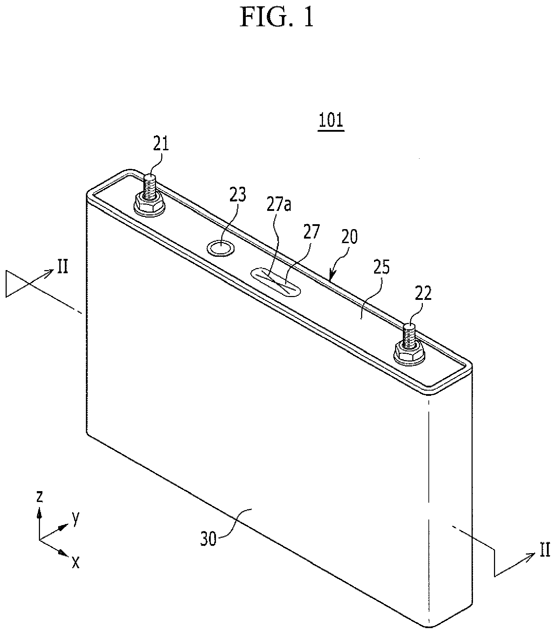

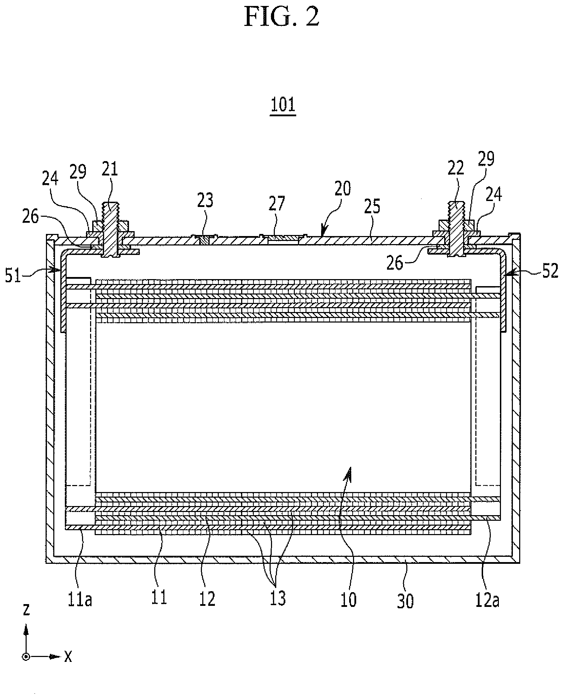

FIG. 1 is a perspective view of a rechargeable battery according to a first embodiment of the invention, and FIG. 2 is a sectional view taken along line II-II in FIG. 2.

With reference to FIGS. 1 and 2, a rechargeable battery 100 according to the first embodiment includes an electrode assembly 10 formed by winding a positive electrode 11 and a negative electrode 12 with a separator 13 interposed therebetween, a case 30 accommodating the electrode assembly 10 therein, and a cap assembly 20 coupled to an opening of the case 30.

In this first embodiment the rechargeable battery 100 is a lithium ion rechargeable battery in a square shape. However, without being limited thereto, the present invention may be applicable to various types of batteries such as a lithium polymer battery, a cylindrical battery, and the like.

The positive electrode 11 and the negative electrode 12 include coated regions of a collector formed as a thin metal foil on which an active material is coated and uncoated regions 11a and 12a on which the active material is not coated, respectively.

The positive electrode uncoated region 11a is formed at one lateral end of the positive electrode 11 along a lengthwise direction of the positive electrode 11, and the negative electrode uncoated region 12a is formed at the other lateral end of the negative electrode 12 along a lengthwise direction of the negative electrode 12. The positive electrode 11 and the negative electrode 12 are wound with a separator 13, which is an insulator, interposed therebetween.

However, the present invention is not meant to be limited thereto, and the electrode assembly 10 may have a structure in which positive and negative electrodes configured as a plurality of sheets are alternately stacked with a separator interposed therebetween.

The case 30 has a shape of a substantially rectangular parallelepiped, and has an opening at one side thereof. The cap assembly 20 includes a cap plate 25 covering the opening of the case 30, a positive electrode terminal 21 outwardly protruding from the cap plate 25 and electrically connected with the positive electrode 11, a negative electrode terminal 22 outwardly protruding from the cap plate 25 and electrically connected with the negative electrode 12, and a vent member 27 with a notch formed to be fractured at a pre-set internal pressure.

The cap plate 25 is formed as a thin plate, includes an electrolyte injection hole formed at one side thereof, and a sealing stopper 23 for sealing the electrolyte injection hole is fixedly installed on the cap plate 25.

The positive electrode terminal 21 is installed in a penetrative manner on the cap plate 25. Between the cap plate 25 and the positive electrode terminal 21, a first gasket 24 positioned at an upper side and an underlying second gasket 26 insulate the cap plate 25 and the positive electrode terminal 21.

The positive electrode terminal 21 has a cylindrical shape, and a nut 29 is installed on the positive electrode terminal 21 in order to support the positive electrode terminal 21 at an upper side, and thread is formed on an outer circumference of the positive electrode terminal 21 to allow the nut 29 to be fastened thereto.

Meanwhile, the positive electrode terminal 21 is electrically connected with the positive electrode uncoated region 11a by the medium of a current collecting member 51, and a terminal flange supporting the positive electrode terminal 21 and the current collecting member 51 is formed at a lower end of the positive electrode terminal 21.

The negative electrode terminal 22 is installed in a penetrative manner on the cap plate 25. Between the cap plate 25 and the negative electrode terminal 22, the first gasket 24 positioned at an upper side and the underlying second gasket 26 insulate the cap plate 25 and the positive electrode terminal 22.

The negative electrode terminal 22 has a cylindrical shape, and the nut 29 is installed on the negative electrode terminal 22 in order to support the negative electrode terminal 22 at an upper side, and thread is formed on an outer circumference of the negative electrode terminal 22 to allow the nut 29 to be fastened thereto.

Meanwhile, the negative electrode terminal 22 is electrically connected with the negative electrode uncoated region 12a by the medium of a current collecting member 52, and a terminal flange supporting the negative electrode terminal 22 and the current collecting member 52 is formed at a lower end of the negative electrode terminal 22.

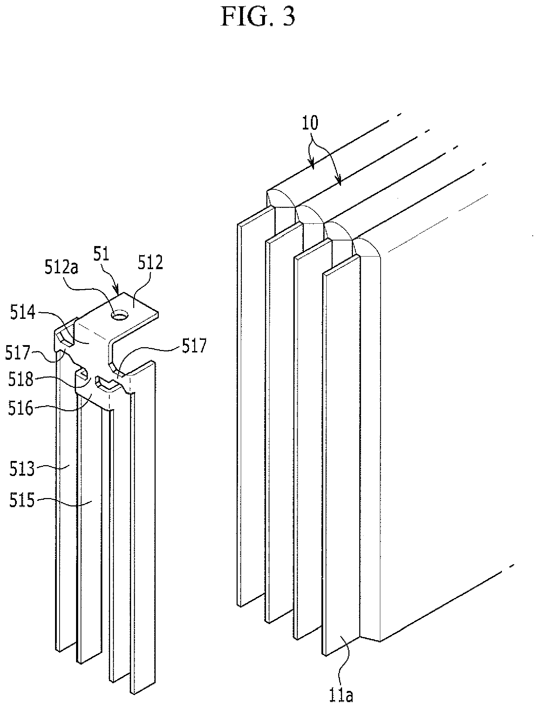

FIG. 3 is a partial exploded perspective view of the rechargeable battery according to the first embodiment of the invention.

The current collecting member 51 includes a terminal connection region 512 extending substantially parallel to a top surface of the battery, a side plate 514 formed to be bent from the terminal connection region 512, a current collecting piece 515 fixed to the positive electrode uncoated region 11a and extending substantially parallel to a side surface of the battery, and fuse regions 517 formed between the side plate 514 and the current collecting piece 515 and having a small sectional area compared with the vicinity.

The current collecting member 52 installed at the negative electrode terminal 22 is configured to have the same structure as that of the current collecting member 51, except for fuse regions 517 and 518, so a repeated description thereof will be omitted.

The terminal connection region 512 has a quadrangular plate-like shape, and includes a hole 512a formed at the center thereof, into which the positive electrode terminal 21 is inserted. The terminal connection region 512 is connected to a lower portion of the positive electrode terminal 21 through welding. The side plate 514 is bent toward the bottom of the case 30 from the terminal connection region 512 at a right angle so as to be disposed to be parallel to the side of the case 30.

Two current collecting pieces 513 are connected to both lateral ends of the side plate 514. The current collecting pieces 513 have a shape of a long quadrangular plate and are connected to the positive electrode uncoated region 11a through welding.

Fuse regions 517 having a smaller sectional area than other portions are formed between the current collecting pieces 513 and the side plate 514. According to the present embodiment, the fuse regions 517 extend in a direction generally parallel to a top surface of the battery and are formed to have a smaller width than the vicinity, and accordingly, when an overcurrent flows through the current collecting member 51, the fuse regions 517 may be melted to cut off an electrical connection between the current collecting piece 513 and the side plate 514. However, the present invention is not meant to be limited thereto and the fuse regions 517 may be formed to have a smaller thickness than the vicinity.

A connection region 516 is formed at a lower portion of the side plate 514, and a fuse region 518 having a smaller sectional area than other portions is formed between the connection region 516 and the side plate 514. Current collecting pieces 515 are formed at both lateral ends of the connection region 516 and connected to the positive electrode uncoated region 11a through welding.

The fuse region 518 is formed to extend in a direction substantially perpendicular to a top surface of the battery and has a smaller width than the vicinity. Accordingly, when an overcurrent flows through the current collecting member 51, the fuse region 518 is melted to cut off an electrical connection between the side plate 514 and the connection region 516.

In this manner, according to the present embodiment, since the plurality of fuse regions 517 are formed to be connected to the side plate 514, when an overcurrent flows, an electrical connection with the respective current collecting pieces 513 can be cut off. Also, since the fuse region 518 is formed between the side plate 514 and the connection region 516, an electrical connection between the side plate 514 and the connection region 516 can be cut off.

It is to be understood that the invention is equally applicable to a construction in which a single current collecting piece and/or fuse region is provided on a current collecting member.

When a plurality of electrode assemblies 10 are insertingly installed and are connected in parallel to each other within the case 30, if the respective electrode assemblies are not blocked, a high capacity current would continuously flow between the electrode assemblies 10 to bring about a dangerous situation. In this case, the continuous flow of current will increase the internal pressure within the case 30 to potentially result in an explosion or ignition. However, according to the present embodiment, when the current collecting pieces 513 and 515 connected to the side plate 514 are blocked, respectively, the capacity of current stored in the electrode assemblies 10 is distributed, enhancing stability.

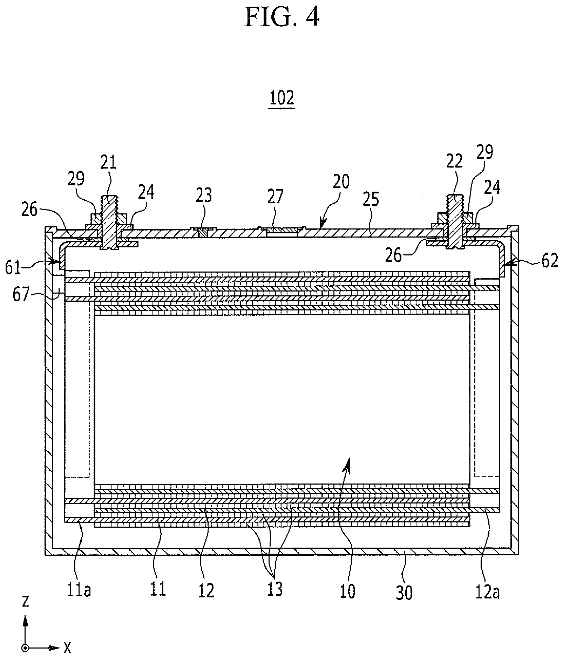

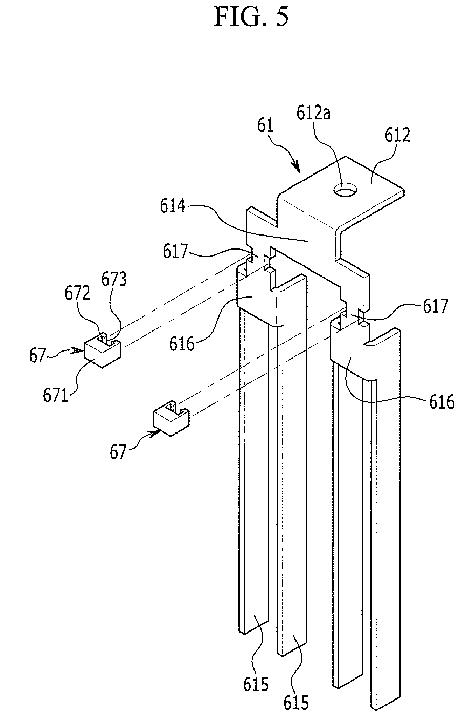

FIG. 4 is a sectional view of a rechargeable battery according to a second embodiment of the invention, and FIG. 5 is a perspective view of a current collecting member of the rechargeable battery according to the second embodiment.

A rechargeable battery 102 according to a second embodiment is configured to have the same structure as that of the first embodiment as described above, except for the structure of the current collecting member 61, so a repeated description of the same structure will be omitted.

With reference to FIGS. 4 and 5, the rechargeable battery 102 according to the second embodiment includes the electrode assembly 10, the positive electrode terminal 21, the negative electrode terminal 22, a current collecting member 61 electrically connecting the positive electrode terminal 21 and the electrode assembly 10, and a current collecting member 62 electrically connecting the negative electrode terminal 22 and the electrode assembly 10.

The current collecting member 61 includes a terminal connection region 612 fixed to the positive electrode terminal 21, a side plate 614 formed to be bent from the terminal connection region 612, two connection regions 616 connected to a lower portion of the side plate 614, and current collecting pieces 615 connected to both lateral ends of the connection regions 616 and attached to the positive electrode uncoated region 11a. Fuse regions 617 extend in a direction substantially perpendicular to a top surface of the battery and have a smaller sectional area than the vicinity are formed between the side plate 614 and the connection regions 616 and 616.

The current collecting member 62 is configured to have the same structure as that of the current collecting member 61, except for the fuse regions 617, so a repeated description thereof will be omitted.

The terminal connection region 612 has a quadrangular plate-like shape, and includes a hole 612a formed at the center thereof, into which the positive electrode terminal 21 is inserted. The terminal connection region 612 is connected to a lower portion of the positive electrode terminal 21 through welding. The side plate 614 is bent toward the bottom of the case 30 from the terminal connection region 612 at a right angle so as to be disposed to be parallel to the side of the case 30.

Two connection regions 616 are separately connected to lower end portions of the side plate 614. The fuse regions 617 having a smaller sectional area than other portions are formed between the connection regions 616 and the side plate 614. Current collecting pieces 615 are formed at both lateral ends of each of the connection regions 616 and connected to the positive electrode uncoated region 11a through welding.

According to the present embodiment, the fuse regions 617 are formed to have a smaller width than the vicinity, and accordingly, when an overcurrent flows through the current collecting member 61, the fuse regions 617 may be melted to cut off an electrical connection between the connection region 616 and the side plate 614. However, the present invention is not meant to be limited thereto and the fuse regions 617 may be formed to have a smaller thickness than the vicinity.

When a plurality of electrode assemblies 10 are installed and connected in parallel within the case 30, if the respective electrode assemblies are not blocked, a high capacity current could continuously flow between and among the electrode assemblies 10 to bring about a dangerous situation. In this case, the continuous flow of current could increase the internal pressure within the case 30 to potentially result in an explosion or ignition. However, according to the present embodiment of the invention, when the connection regions 616 connected to the side plate 614 are blocked, respectively, the capacity of current stored in the electrode assemblies 10 is distributed, enhancing stability.

A blocking member 67 is insertingly installed on each of the fuse regions 617 and 617. The blocking members 67 may be made of a polymer, or the like, having electrical insulation properties. Each blocking member 67 includes a base region 671 and a projection 672 protruding from each lateral end of the base region 671. A stopping protrusion 673 is formed at a front end of each of the projections 672 and projects inwardly. The projections 672 of each blocking member 67 are inserted into recesses formed on a respective one of the fuse regions 617, and the stopping protrusions 673 are in contact with the fuse region 617, thereby supporting the position blocking member 67.

The base regions 671 are positioned between the case 30 and the current collecting member 61 to insulate the current collecting member 61 and the case 30. When the fuse regions 617 are melted, the projections 672 support them such that the melted portions are separated. Accordingly, after the fuse regions 617 are melted, the separated portions can be prevented from being in contact again.

When the fuse regions 617 are melted, if the separated portions are in proximity, a fire, or the like, may spark at the separated portions and the rechargeable battery 102 may ignite. However, according to the present embodiment, since the blocking members 67 are installed, the gap between the separated portions can be stably maintained.

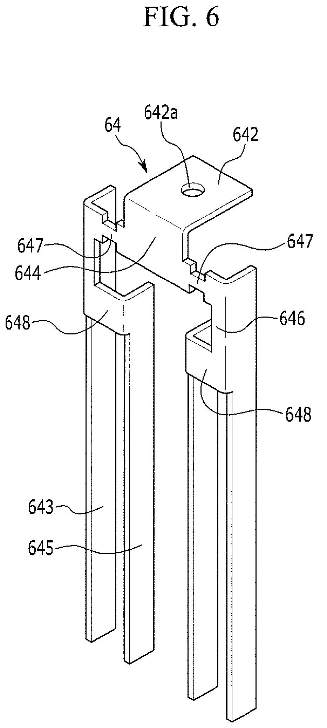

FIG. 6 is a perspective view of a current collecting member of a rechargeable battery according to a third embodiment of the invention.

With reference to FIG. 6, a rechargeable battery according to the third embodiment of the invention is configured to have the same structure as that of the first embodiment, except for the structure of a current collecting member, so a repeated description of the same structure will be omitted.

A current collecting member 64 according to the third embodiment includes a terminal connection region 642 fixed to the positive electrode terminal 21, a side plate 644 formed to be bent from the terminal connection region 642, two connection regions 646 connected to both lateral ends of the side plate 644, and current collecting pieces 643 formed at lower portions of the connection regions 646 and attached to the positive electrode uncoated region 11a. Fuse regions 647 having a smaller sectional area than the vicinity are formed between the side plate 644 and the connection regions 646.

The terminal connection region 642 has a quadrangular plate-like shape, and includes a hole 642a formed at the center thereof, into which the positive electrode terminal 21 is inserted. The terminal connection region 642 is connected to a lower portion of the positive electrode terminal 21 through welding. The side plate 644 is bent toward the bottom of the case 30 from the terminal connection region 642 at a right angle so as to be disposed to be parallel to the side of the case 30.

Connection regions 646 are connected with both lateral ends of the side plate 644, and a current collecting piece 643 is formed at a lower portion of the connection region 646 and attached to the positive electrode uncoated region 11a. Branch regions 648 are formed to be protruded from lateral ends of the connection regions 646, and current collecting pieces 645 are connected to the branch regions 648.

Fuse regions 647 each having a smaller sectional area than other portions are formed between the connection regions 646 and the side plate 644. According to the present embodiment, the fuse regions 647 are formed to have a smaller width than the vicinity, and accordingly, when an overcurrent flows through the current collecting member 64, the fuse regions 647 may be melted to cut off an electrical connection between the connection regions 646 and the side plate 644. However, the present invention is not meant to be limited thereto and the fuse regions 647 may be formed to have a smaller thickness than the vicinity.

When a plurality of electrode assemblies 10 are insertingly installed and connected in parallel within the case 30, if the respective electrode assemblies are not blocked, a high capacity current would continuously flow between and among the electrode assemblies 10 to bring about a dangerous situation. In this case, the continuous flow of current will increase the internal pressure within the case 30 to potentially cause an explosion or ignition.

However, according to the present embodiment, when the connection regions 646 connected to the side plate 644 are blocked, respectively, the capacity of current stored in the electrode assemblies 10 is distributed, enhancing stability.

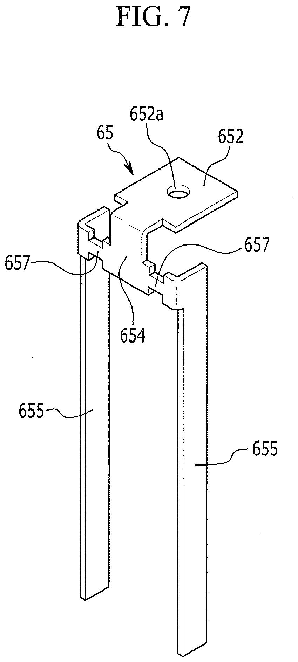

FIG. 7 is a perspective view of a current collecting member of a rechargeable battery according to a fourth embodiment of the invention.

With reference to FIG. 7, a rechargeable battery according to a fourth embodiment of the invention is configured to have the same structure as that of the first embodiment, except for the number of the electrode assemblies, so a repeated description of the same structure will be omitted.

The current collecting member 65 of the rechargeable battery according to the fourth embodiment includes a terminal connection region 652 fixed to the positive electrode terminal 21, a side plate 654 formed to be bent from the terminal connection region 652, current collecting pieces 655 connected to both lateral ends of the side plate 654, and fuse regions 657 formed between the side plate 654 and the current collecting pieces 655.

The terminal connection region 652 has a quadrangular plate-like shape, and includes a hole 652a formed at the center thereof, into which the positive electrode terminal 21 is inserted. The terminal connection region 652 is connected to a lower portion of the positive electrode terminal 21 through welding. The side plate 654 is bent toward the bottom of the case 30 from the terminal connection region 512 at a right angle so as to be disposed to be parallel to the side of the case 30.

Fuse regions 657 having a smaller sectional area than other portions are formed at both lateral ends of the side plate 654. The fuse regions are aligned substantially parallel to the top surface of the battery, but they could alternatively be aligned in a perpendicular direction to this surface. According to the present embodiment, the fuse regions 657 are formed to have a smaller width than the vicinity, and accordingly, when an overcurrent flows through the current collecting member 65, the fuse regions 657 may be melted to cut off an electrical connection between the current collecting pieces 655 and the side plate 654. However, the present invention is not meant to be limited thereto and the fuse regions 657 may be formed to have a smaller thickness than the vicinity.

Current collecting pieces 655 are formed at one lateral end of each of the fuse regions 657 and connected to the positive electrode uncoated region 11a through welding.

When two electrode assemblies 10 are insertingly installed and connected in parallel within the case 30, if the respective electrode assemblies are not blocked, a high capacity current would continuously flow between the electrode assemblies 10 to bring about a dangerous situation. In this case, the continuous flow of current will increase the internal pressure within the case 30 to potentially end up in an explosion or ignition.

However, according to the present embodiment, when the current collecting pieces 655 connected to the side plate 654 are blocked, respectively, the capacity of current stored in the electrode assemblies 10 is distributed, enhancing stability.

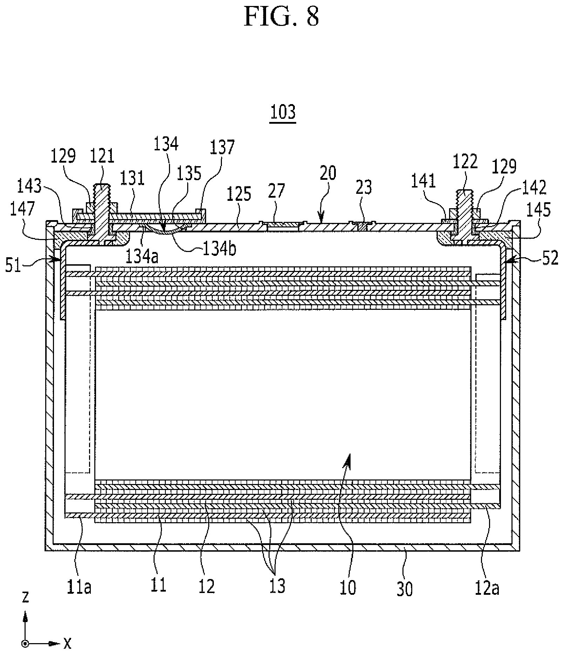

FIG. 8 is a sectional view of a rechargeable battery according to a fifth embodiment of the invention.

With reference to FIG. 8, a rechargeable battery 103 according to this fifth embodiment of the invention includes an electrode assembly 10 formed by winding the positive electrode 11 and the negative electrode 12 with the separator 13 interposed therebetween, the case 30 accommodating the electrode assembly 10 therein, and a cap assembly 120 coupled to an opening of the case 30.

The electrode assembly 10 is configured to have the same structure as that of the first embodiment as described above.

The case 30 has a shape of a substantially rectangular parallelepiped, and has an opening at one side thereof. The cap assembly 120 includes a cap plate 125 covering the opening of the case 30, a positive electrode terminal 121 outwardly protruding from the cap plate 125 and electrically connected with the positive electrode 11, and a negative electrode terminal 122 outwardly protruding from the cap plate 125 and electrically connected with the negative electrode 12.

The positive electrode terminal 121 is electrically connected with the positive electrode uncoated region 11a via the current collecting member 51. The current collecting member 51 is configured to have the same structure as that of the current collecting member according to the first embodiment of the invention.

Between the positive electrode terminal 121 and the cap plate 125, a gasket 143 is insertingly positioned in a hole into which the positive electrode terminal 121 penetrates. A lower insulating member 147 is installed under the cap plate 125 to insulate portions of the positive electrode terminal 121 and the current collecting member 51 inserted therein from the cap plate 125.

Meanwhile, a short-circuit tab 131 is electrically connected to the positive electrode terminal 121, and here, the short-circuit tab 131 is installed on the cap plate 125. An upper insulating member 137 is installed between the short-circuit tab 131 and the cap plate 125 in order to electrically insulate the short-circuit tab 131 and the cap plate 125. The short-circuit tab 131 is electrically connected with the positive electrode terminal 121 via a nut 129. The upper insulating member 137 is installed to cover the lateral end of the short-circuit tap 131, and has a hole at a portion corresponding to a short-circuit hole 135 formed on the cap plate 125.

The negative electrode terminal 122 is installed to penetrate the cap plate 125, and a connection plate 141 is installed between the cap plate 125 and the negative electrode terminal 122 to electrically connect the negative electrode terminal 122 and the cap plate 125. Accordingly, the cap plate 125 and the case 30 are negatively charged. Between the negative electrode terminal 122 and the cap plate 125, a gasket 142 is insertingly positioned in a hole into which the negative electrode terminal 122 penetrates.

The cap assembly 120 includes a short-circuit member 135 that can shortcircuit the positive electrode 11 and the negative electrode 12. The short-circuit hole 135 is formed in the cap plate 125, and the short-circuit member 135 is disposed at the short-circuit hole 135 between the upper insulating member 137 and the cap plate 125. The short-circuit member 135 is configured as a reversal plate including an edge portion 134a formed at the edge thereof and fixed to the cap plate 125 and a curved portion 134b formed to be convex in an arc shape at an inner side of the edge portion 134a.

In this manner, the short-circuit member 135 is connected with the cap plate 125 which is electrically connected with the negative electrode 12, and when the internal pressure of the rechargeable battery 103 increases, the short-circuit member 135 is deformed to be connected to the short-circuit tab 131 electrically connected with the positive electrode 11.

When the short-circuit member 135 is electrically connected to the short-circuit tab 131, a large current instantly flows through the current collecting member 51. At this time, the fuse regions 517 and 518 are melted to cut off an electrical connection between the positive electrode terminal 121 and the electrode assembly 10 as well as an electrical connection between the electrode assemblies 10.

In this manner, by applying both the short-circuit member 135 and the current collecting member including a plurality of fuse regions, current can be easily interrupted (or cut off) when the internal pressure of the rechargeable battery 103 is increased, thus further enhancing stability.

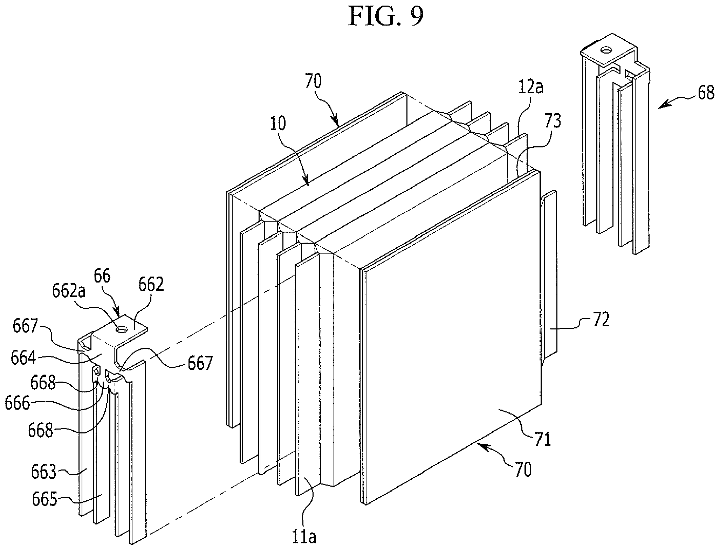

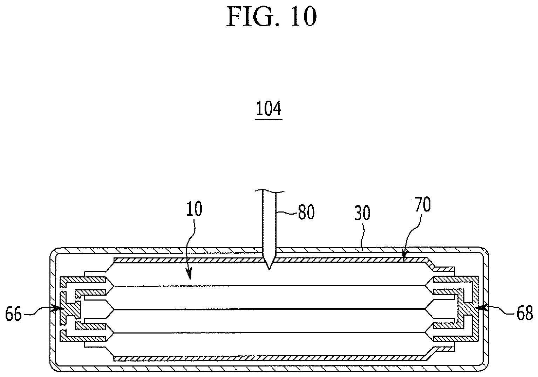

FIG. 9 is a partial exploded perspective view of a rechargeable battery according to a sixth embodiment of the invention, and FIG. 10 is a schematic view showing the configuration of the rechargeable battery according to the sixth embodiment.

With reference to FIGS. 9 and 10, a rechargeable battery 104 according to this sixth embodiment is configured to have the same structure as that of the first embodiment, so a repeated description of the same structure will be omitted.

A current collecting member 66 is connected to the positive electrode uncoated region 11a through welding, and a current collecting member 68 is connected to the negative electrode uncoated region 12a through welding.

The current collecting member 66 electrically connects the positive electrode 11 and the positive electrode terminal 21, and the current collecting member 68 electrically connects the negative electrode 12 and the negative electrode terminal 22.

The current collecting member 66 includes a terminal connection region 662 fixed to the positive electrode terminal 21, a side plate 664 formed to be bent from the terminal connection region 662, a current collecting piece 663 fixed to the positive electrode uncoated region 11a, and a fuse region 667 formed between the side plate 664 and the current collecting piece 663 and having a smaller sectional area than the vicinity.

The current collecting member 68 installed at the negative electrode terminal 22 is configured to have the same structure as that of the current collecting member 66, except for fuse regions 667 and 668, so a repeated description thereof will be omitted.

The terminal connection region 662 has a quadrangular plate-like shape, and includes a hole 662a formed at the center thereof, into which the positive electrode terminal 21 is inserted. The terminal connection region 662 is connected to a lower portion of the positive electrode terminal 21 through welding. The side plate 664 is bent toward the bottom of the case 30 from the terminal connection region 662 at a right angle so as to be disposed to be parallel to the side of the case 30.

A current collecting piece 663 is connected to each lateral end of the side plate 664. The fuse region 667 having a smaller sectional area than other portions is formed between eacj current collecting piece 663 and the side plate 664.

According to the present embodiment, the fuse region 667 is formed to have a smaller width than the vicinity, and accordingly, when an overcurrent flows through the current collecting member 66, the fuse region 667 may be melted to cut off an electrical connection between the current collecting piece 663 and the side plate 664. However, the present invention is not meant to be limited thereto and the fuse region 667 may be formed to have a smaller thickness than the vicinity.

A connection region 666 is formed at a lower portion of the side plate 664, and current collecting pieces 665 are formed at both lateral ends of the connection region 666 and connected to the positive electrode uncoated region 11a through welding. Fuse regions 668 having a smaller sectional area than other portions are formed between the connection region 666 and the current collecting piece 665.

Each fuse region 668 is formed to have a smaller width than the vicinity, and accordingly, when an overcurrent flows through the current collecting member 66, the fuse region 668 is melted to cut off an electrical connection between the connection region 666 and the current collecting piece 665.

In this manner, according to the present embodiment, since the plurality of fuse regions 667 are formed to be connected with the side plate 664, when an overcurrent flows, an electrical connection with the respective current collecting pieces 663 can be cut off. In addition, since the plurality of fuse regions 668 are formed to be connected with the connection region 666, when an overcurrent flows, an electrical connection with the respective current collecting pieces 665 can be cut off.

Also, safety members 70 electrically connected with the negative electrode 12 are installed on the electrode assemblies 10 disposed at both lateral ends among the electrode assemblies 10, respectively.

The safety members 70 are connected to the negative electrode uncoated regions 12a of the electrode assemblies 10 disposed at both lateral ends among the electrode assemblies 10, through welding. The safety members 70 each include a metal plate 71 and an insulating film 73 attached to the metal plate 71.

An electrode connection region 72 electrically connected with the negative electrode uncoated region 12a is connected to one lateral end of the metal plate 71. The metal plate 71 is connected with the negative electrode uncoated region 12a at the electrode connection region 72 through welding, and is made of the same material as that of the negative electrode uncoated region 12a so as to be easily welded to the negative electrode uncoated region 12a. The metal plate 71 according to the present embodiment is made of copper (Cu) or a copper alloy.

An insulating film 73 is installed on a portion of the metal plate 71 opposed to a flat front surface of the electrode assembly 10. The insulating film 73 serves to prevent the electrode assembly 10 and the metal plate 71 from being electrically connected. The insulating film 73 is made of a polymer material that does not react with an electrolyte.

The electrode connection region 72, in a state of being disposed to be parallel to the negative electrode uncoated region 12a, is fixed to the negative electrode uncoated region 12a through welding. Accordingly, the electrode connection region 72 serves to prevent the negative electrode uncoated region 12a from wobbling due to an external impact or vibration.

The current collecting member 68 is connected to the negative electrode uncoated region 12a through welding, so if the negative electrode uncoated region 12a wobbles due to an external impact or vibration, contact between the negative electrode uncoated region 12a and the current collecting member 68 would deteriorate. However, in the present embodiment, since the electrode connection region 72 supports the negative electrode uncoated region 12a, the contact between the negative electrode uncoated region 12a and the current collecting member 68 can be prevented from deteriorating due to an external impact, vibration, or the like,

As shown in FIG. 10, when a conductive foreign object 80 such as a nail, a gimlet, or the like, infiltrates into the rechargeable battery 104, if the positive electrode 11 and the negative electrode 12 are short-circuited via the conductive foreign object 80, an excessive amount heat would be generated within the rechargeable battery 104, leading to a possibility that the rechargeable battery might explode or ignite. However, in the present embodiment, since the safety member 70 is installed, the safety member 70 and the positive electrode 11 are short-circuited, thereby discharging the charged current. When the metal plate 71 electrically connected with the negative electrode 12 is short-circuited with the positive electrode 11, a very small amount of heat is generated compared to the case in which the positive electrode 11 and the negative electrode 12 are short-circuited.

In this manner, according to the present embodiment, when a foreign object infiltrates from the outside, potentially causing a short-circuit, the current is discharged to remove the risk of ignition, thus enhancing the stability of the rechargeable battery 104.

Also, when short-circuit occurs so an overcurrent flows, the fuse regions 667 and 668 formed at the current collecting member 66 are melted to cut off an electrical connection between the positive electrode terminal 21 and the electrode assemblies 10 and an electrical connection between the electrode assemblies. Accordingly, the stability of the rechargeable battery 104 can be further enhanced.

The invention is not limited to the specific arrangements of fuse regions and current collecting pieces described abode It is possible for the current collecting member to have fuse regions orientated in a variety of directions, which may be mixed within a single example. The number of current collecting pieces may also vary from the members illustrated above.

While this disclosure has been described in connection with what is presently considered to be practical embodiments of the invention, it is to be understood that the invention is not limited to these embodiments, but, on the contrary, is intended to cover various modifications and equivalent arrangements included within the scope of the appended claims.

## Claims

1. A rechargeable battery comprising:
a housing (30),
an electrode assembly (10) including a first electrode (11) and a second electrode (12) and situated within the housing;
a first electrode terminal (21); and
a first current collecting member (51);
wherein the first current collecting member (51) comprises a terminal connection portion (512) that is electrically connected to the first electrode terminal (21) and extends substantially parallel to a top surface of the battery, a side plate (514) formed to be bent from the terminal connection portion (512) and a current collecting piece (513, 515) that is electrically connected to the first electrode (11) and extends substantially parallel to a side surface of the battery;
**characterised in that** the first current collecting member (51) comprises a fuse (517, 518) located between the side plate (514) and the current collecting piece (513, 515) and connecting the side plate (514) to the current collecting piece (513, 515), wherein the fuse is adapted to melt and cut off the electrical connection between the current collecting piece (513) and the side plate (514) when an overcurrent flows through the current collecting member (51);
wherein the or each fuse comprises a blocking member (67) for resisting contact between portions of the current collecting member that are located on opposite sides of the fuse following activation of the fuse, and
the blocking member (67) is made of the electrically insulating material and is insertingly installed on the fuse.

2. A rechargeable battery according to claim 1, comprising a plurality of electrode assemblies (10), each of which includes a respective first electrode (11) and a respective second electrode (12); wherein the first current collecting member (51) comprises a plurality of current collecting pieces (513, 515) and each said current collecting piece is connected to a respective said first electrode (11).

3. A rechargeable battery according to claim 2, wherein the first current collecting member (51) comprises a respective first fuse (517) located between each current collecting piece (513) and the side plate (514).

4. A rechargeable battery according to claim 2 or 3, wherein the first current collecting member (51) comprises a second fuse (518) located between the side plate (514) and more than one of the said current collecting pieces (515).

5. A rechargeable battery according to claim 4, wherein the first current collecting member (61) comprises a said second fuse (617) located between the side plate (614) and a first pair of the said current collecting pieces (615) and a said second fuse (617) located between the said terminal connection portion (612) and a second pair of the said current collecting pieces.

6. A rechargeable battery according to claim 4 or 5 when dependent upon claim 3, wherein each said first fuse (517) comprises a fuse region having a reduced cross-section relative to an adjacent portion of the first current collecting member, which fuse region (517) extends in a direction substantially parallel to the top surface of the battery.

7. A rechargeable battery according to claim 4 or 5 when dependent upon claim 3, wherein each said first fuse comprises a fuse region having a reduced cross-section relative to an adjacent portion of the first current collecting member, which fuse region extends in a direction substantially perpendicular to the top surface of the battery.

8. A rechargeable battery according to claim 4 or 5, wherein the or each said second fuse comprises a fuse region (518, 617) having a reduced cross-section relative to an adjacent portion of the first current collecting member, which fuse region extends in a direction substantially perpendicular to the top surface of the battery.

9. A rechargeable battery according to claim 4 or 5, wherein the or each said second fuse comprises a fuse region (647) having a reduced cross-section relative to an adjacent portion of the first current collecting member, which fuse region extends in a direction substantially parallel to the top surface of the battery.

10. A rechargeable battery according to any preceding claim, comprising a second current collecting member (52) that comprises a terminal connection portion that is electrically connected to the second electrode terminal and a current collecting piece that is electrically connected to the second electrode; wherein the second current collecting member comprises a fuse located between its terminal connection portion and its current collecting piece.

11. A rechargeable battery according to claim 10, wherein the second current collecting member (52) has a substantially identical configuration to the first current collecting member (51).

12. A rechargeable battery according to one of claims 1 to 9, comprising
a cap plate (20) fitted to the housing (30) and electrically connected to the second electrode terminal (122),
a short-circuit tab (131) that is electrically connected to the first electrode terminal (121), and
a short-circuit member (134) that is electrically connected to the cap plate (20); wherein the short-circuit member (34) is adapted to contact the short-circuit tab (131) upon an increase in pressure within the battery housing (30).

## Patentansprüche

1. Wiederaufladbare Batterie, umfassend:
ein Gehäuse (30),
eine Elektrodenanordnung (10), die eine erste Elektrode (11) und eine zweite Elektrode (12) einschließt und sich innerhalb des Gehäuses befindet;
einen ersten Elektrodenanschluss (21); und
ein erstes Stromsammelelement (51);
wobei das erste Stromsammelelement (51) einen Anschlussverbindungsabschnitt (512), der mit dem ersten Elektrodenanschluss (21) elektrisch verbunden ist und sich im Wesentlichen parallel zu einer oberen Fläche der Batterie erstreckt, eine Seitenplatte (514), die ausgebildet ist, um vom Anschlussverbindungsabschnitt (512) gebogen zu sein, und ein Stromsammelteil (513, 515), das mit der ersten Elektrode (11) elektrisch verbunden ist und sich im Wesentlichen parallel zu einer Seitenfläche der Batterie erstreckt, umfasst;
**dadurch gekennzeichnet, dass** das erste Stromsammelelement (51) eine Sicherung (517, 518) umfasst, die sich zwischen der Seitenplatte (514) und dem Stromsammelteil (513, 515) befindet und die Seitenplatte (514) mit dem Stromsammelteil (513, 515) verbindet, wobei die Sicherung dazu angepasst ist, zu schmelzen und die elektrische Verbindung zwischen dem Stromsammelteil (513) und der Seitenplatte (514) zu trennen, wenn ein Überstrom durch das Stromsammelelement (51) fließt;
wobei die bzw. jede Sicherung ein Sperrelement (67) umfasst, um einem Kontakt zwischen Abschnitten des Stromsammelelements, die sich auf gegenüberliegenden Seiten der Sicherung befinden, nach der Aktivierung der Sicherung zu widerstehen, und
wobei das Sperrelement (67) aus elektrisch isolierendem Material gefertigt und an der Sicherung eingesetzt angebracht ist.

2. Wiederaufladbare Batterie nach Anspruch 1, umfassend eine Mehrzahl von Elektrodenanordnungen (10), wovon jede eine jeweilige erste Elektrode (11) und eine jeweilige zweite Elektrode (12) einschließt; wobei das erste Stromsammelelement (51) eine Mehrzahl von Stromsammelteilen (513, 515) umfasst und jedes Stromsammelteil mit einer jeweiligen ersten Elektrode (11) verbunden ist.

3. Wiederaufladbare Batterie nach Anspruch 2, wobei das erste Stromsammelelement (51) eine jeweilige erste Sicherung (517) umfasst, die sich zwischen jedem Stromsammelteil (513) und der Seitenplatte (514) befindet.

4. Wiederaufladbare Batterie nach Anspruch 2 oder 3, wobei das erste Stromsammelelement (51) eine zweite Sicherung (518) umfasst, die sich zwischen der Seitenplatte (514) und mehr als einem der Stromsammelteile (515) befindet.

5. Wiederaufladbare Batterie nach Anspruch 4, wobei das erste Stromsammelelement (61) eine zweite Sicherung (617), die sich zwischen der Seitenplatte (614) und einem ersten Paar der Stromsammelteile (615) befindet, und eine zweite Sicherung (617), die sich zwischen dem Anschlussverbindungsabschnitt (612) und einem zweiten Paar der Stromsammelteile befindet, umfasst.

6. Wiederaufladbare Batterie nach Anspruch 4 oder 5, sofern abhängig von Anspruch 3, wobei jede erste Sicherung (517) einen Sicherungsbereich mit einem reduzierten Querschnitt in Bezug auf einen benachbarten Abschnitt des ersten Stromsammelelements umfasst, wobei sich der Sicherungsbereich (517) in einer zur oberen Fläche der Batterie im Wesentlichen parallelen Richtung erstreckt.

7. Wiederaufladbare Batterie nach Anspruch 4 oder 5, sofern abhängig von Anspruch 3, wobei jede erste Sicherung einen Sicherungsbereich mit einem reduzierten Querschnitt in Bezug auf einen benachbarten Abschnitt des ersten Stromsammelelements umfasst, wobei sich der Sicherungsbereich in einer zur oberen Fläche der Batterie im Wesentlichen senkrechten Richtung erstreckt.

8. Wiederaufladbare Batterie nach Anspruch 4 oder 5, wobei die bzw. jede zweite Sicherung einen Sicherungsbereich (518, 617) mit einem reduzierten Querschnitt in Bezug auf einen benachbarten Abschnitt des ersten Stromsammelelements umfasst, wobei sich der Sicherungsbereich in einer zur oberen Fläche der Batterie im Wesentlichen senkrechten Richtung erstreckt.

9. Wiederaufladbare Batterie nach Anspruch 4 oder 5, wobei die bzw. jede zweite Sicherung einen Sicherungsbereich (647) mit einem reduzierten Querschnitt in Bezug auf einen benachbarten Abschnitt des ersten Stromsammelelements umfasst, wobei sich der Sicherungsbereich in einer zur oberen Fläche der Batterie im Wesentlichen parallelen Richtung erstreckt.

10. Wiederaufladbare Batterie nach einem der vorangehenden Ansprüche, umfassend ein zweites Stromsammelelement (52), das einen Anschlussverbindungsabschnitt, der mit dem zweiten Elektrodenanschluss elektrisch verbunden ist, und ein Stromsammelteil, das mit der zweiten Elektrode elektrisch verbunden ist, umfasst; wobei das zweite Stromsammelelement eine Sicherung umfasst, die sich zwischen seinem Anschlussverbindungsabschnitt und seinem Stromsammelteil befindet.

11. Wiederaufladbare Batterie nach Anspruch 10, wobei das zweite Stromsammelelement (52) eine zum ersten Stromsammelelement (51) im Wesentlichen identische Konfiguration aufweist.

12. Wiederaufladbare Batterie nach einem der Ansprüche 1 bis 9, umfassend
eine Abdeckplatte (20), die an das Gehäuse (30) angepasst und mit dem zweiten Elektrodenanschluss (122) elektrisch verbunden ist,
einen Kurzschlussstreifen (131), der mit dem ersten Elektrodenanschluss (121) elektrisch verbunden ist, und
ein Kurzschlusselement (134), das mit der Abdeckplatte (20) elektrisch verbunden ist;
wobei das Kurzschlusselement (34) dazu angepasst ist, bei Erhöhung des Drucks innerhalb des Batteriegehäuses (30) mit dem Kurzschlussstreifen (131) in Kontakt zu kommen.

## Revendications

1. Batterie rechargeable comprenant :
un boîtier (30),
un ensemble d'électrodes (10) comportant une première électrode (11) et une deuxième électrode (12) et situé à l'intérieur du boîtier ;
une première borne d'électrode (21) ; et
un premier élément collecteur de courant (51) ;
dans laquelle le premier élément collecteur de courant (51) comprend une partie de liaison de borne (512) qui est électriquement reliée à la première borne d'électrode (21) et s'étend sensiblement parallèlement à une surface supérieure de la batterie, une plaque latérale (514) formée pour être pliée à partir de la partie de liaison de borne (512) et une pièce collectrice de courant (513, 515) qui est électriquement reliée à la première électrode (11) et s'étend sensiblement parallèlement à une surface latérale de la batterie ;
**caractérisée en ce que** le premier élément collecteur de courant (51) comprend un fusible (517, 518) situé entre la plaque latérale (514) et la pièce collectrice de courant (513, 515) et reliant la plaque latérale (514) à la pièce collectrice de courant (513, 515), où le fusible est adapté pour fondre et couper la liaison électrique entre la pièce collectrice de courant (513) et la plaque latérale (514) lorsqu'une surintensité traverse l'élément collecteur de courant (51) ; ;
dans laquelle le ou chaque fusible comprend un élément de blocage (67) pour résister au contact entre des parties de l'élément collecteur de courant qui sont situées sur des côtés opposés du fusible après l'activation du fusible, et
l'élément de blocage (67) est constitué du matériau électriquement isolant et est installé par insertion sur le fusible.

2. Batterie rechargeable selon la revendication 1, comprenant une pluralité d'ensembles d'électrodes (10), dont chacun comporte une première électrode respective (11) et une deuxième électrode respective (12) ; où le premier élément collecteur de courant (51) comprend une pluralité de pièces collectrices de courant (513, 515) et chacune desdites pièces collectrices de courant est reliée à ladite première électrode respective (11).

3. Batterie rechargeable selon la revendication 2, dans laquelle le premier élément collecteur de courant (51) comprend un premier fusible respectif (517) situé entre chaque pièce collectrice de courant (513) et la plaque latérale (514).

4. Batterie rechargeable selon la revendication 2 ou 3, dans laquelle le premier élément collecteur de courant (51) comprend un deuxième fusible (518) situé entre la plaque latérale (514) et plus d'une desdites pièces collectrices de courant (515).

5. Batterie rechargeable selon la revendication 4, dans laquelle le premier élément collecteur de courant (61) comprend ledit deuxième fusible (617) situé entre la plaque latérale (614) et une première paire desdites pièces collectrices de courant (615) et ledit deuxième fusible (617) situé entre ladite partie de liaison de borne (612) et une deuxième paire desdites pièces collectrices de courant.

6. Batterie rechargeable selon la revendication 4 ou 5 lorsqu'elle dépend de la revendication 3, dans laquelle chacun desdits premiers fusibles (517) comprend une région de fusible ayant une section transversale réduite par rapport à une partie adjacente du premier élément collecteur de courant, laquelle région de fusible (517) s'étend dans une direction sensiblement parallèle à la surface supérieure de la batterie.

7. Batterie rechargeable selon la revendication 4 ou 5 lorsqu'elle dépend de la revendication 3, dans laquelle chacun desdits premiers fusibles comprend une région de fusible ayant une section transversale réduite par rapport à une partie adjacente du premier élément collecteur de courant, laquelle région de fusible s'étend dans une direction sensiblement perpendiculaire à la surface supérieure de la batterie.

8. Batterie rechargeable selon la revendication 4 ou 5, dans laquelle ledit ou chacun desdits deuxième(s) fusible(s) comprend une région de fusible (518, 617) ayant une section transversale réduite par rapport à une partie adjacente du premier élément collecteur de courant, laquelle région de fusible s'étend dans une direction sensiblement perpendiculaire à la surface supérieure de la batterie.

9. Batterie rechargeable selon la revendication 4 ou 5, dans laquelle ledit ou chacun desdits deuxième(s) fusible(s) comprend une région de fusible (647) ayant une section transversale réduite par rapport à une partie adjacente du premier élément collecteur de courant, laquelle région de fusible s'étend dans une direction sensiblement parallèle à la surface supérieure de la batterie.

10. Batterie rechargeable selon l'une des revendications précédentes, comprenant un deuxième élément collecteur de courant (52) qui comprend une partie de liaison de borne qui est électriquement reliée à la deuxième borne d'électrode et une pièce collectrice de courant qui est électriquement reliée à la deuxième électrode ; où le deuxième élément collecteur de courant comprend un fusible situé entre sa partie de liaison de borne et sa pièce collectrice de courant.

11. Batterie rechargeable selon la revendication 10, dans laquelle le deuxième élément collecteur de courant (52) a une configuration sensiblement identique au premier élément collecteur de courant (51).

12. Batterie rechargeable selon l'une des revendications 1 à 9, comprenant
une plaque de capuchon (20) ajustée au boîtier (30) et électriquement reliée à la deuxième borne d'électrode (122),
une languette de court-circuit (131) qui est électriquement reliée à la première borne d'électrode (121), et
un élément de court-circuit (134) qui est électriquement relié à la plaque de capuchon (20) ;
dans laquelle l'élément de court-circuit (34) est adapté pour entrer en contact avec la languette de court-circuit (131) lors d'une augmentation de pression dans le boîtier de batterie (30).
